# EUROPÄISCHE PATENTSCHRIFT

(11) **EP 2 156 984 B1**
(45) Veröffentlichungstag und Bekanntmachung des Hinweises auf die Patenterteilung: **29.08.2012**
(21) Anmeldenummer: 09165950.8
(22) Anmeldetag: 21.07.2009
(51) Int. Cl.: B60Q 1/14

(54) **Verfahren und Vorrichtung zum Steuern der vertikalen Hell-Dunkel-Grenze bei Scheinwerfern**
Method and device for controlling the vertical cut-off line of headlamps
Procédé et dispositif de commande de ligne de coupure verticale de phares

(30) Priorität: 20.08.2008 DE 102008038535
(43) Veröffentlichungstag der Anmeldung: 24.02.2010
(73) Patentinhaber: Hella KGaA Hueck & Co., 59552 Lippstadt (DE)
(72) Erfinder: Beneke, Frank, 98574, Schmalkalden (DE); Schwarz, Sergej, 70825, Korntal-Münchingen (DE)

(56) Entgegenhaltungen:
- DE-A1- 2 144 197
- DE-A1-102007 045 150
- US-A- 6 144 158

## Beschreibung

Die Erfindung betrifft eine Vorrichtung zum Steuern der vertikalen Hell-Dunkel-Grenze bei Scheinwerfern eines Kraftfahrzeugs.

Aus der Offenlegungsschrift mit der Veröffentlichungsnummer DE 21 44 197 ist ein Kraftfahrzeugscheinwerfer bekannt, bei dem die vertikale Hell-Dunkel-Grenze eingestellt werden kann. Die vertikale Hell-Dunkel-Grenze wird durch den Scheinwerfer automatisch so eingestellt, dass eine Blendung des vorausfahrenden Verkehrs oder den entgegenkommenden Verkehrs möglichst vermieden wird. Dazu können die vertikale Hell-Dunkel-Grenzen des von dem Scheinwerfer abgestrahlten Lichts nach rechts oder links verschoben werden. Die Verschiebung der Hell-Dunkel-Grenzen erfolgt so, dass der linke Scheinwerfer des Fahrzeugs links an dem Objekt vorbei leuchtet, dessen Fahrer möglicherweise geblendet werden könnte, und der rechte Scheinwerfer so eingestellt wird, dass das von diesem Scheinwerfer abgestrahlten Lichts rechts von dem Fahrzeug liegt, das entblendet wird. Dadurch entsteht zwischen dem vom rechten und vom linken Scheinwerfer beleuchteten Raum ein unbeleuchteter Bereich der Tunnel genannt wird, in welchem sich das vorrausfahrende Fahrzeug bewegt. Der Tunnel wird links von der linken vertikalen Hell-Dunkel-Grenze und rechts von der rechten vertikalen Hell-Dunkel-Grenze begrenzt.

Um ein automatisches Einstellen der vertikalen Hell-Dunkel-Grenzen der Scheinwerfer erreichen zu können, weist der Scheinwerfer ein Sensorsystem auf. Das Sensorsystem erkennt Lichtquellen des vorausfahrenden oder entgegenkommenden Fahrzeugs, d. h. entweder die Frontscheinwerfer oder aber die Rückleuchten des Fahrzeugs.

Weiterentwicklungen zu dem in der genannten Offenlegungsschrift DE 21 44 197 offenbarten Scheinwerfer sind Steuervorrichtungen für Scheinwerfer mit einstellbarer Hell-Dunkel-Grenze. Über Eingänge einer solchen Steuervorrichtung können Eingangssignale eingelesen werden, welche die auf eine Längsachse des Kraftfahrzeugs bezogenen Richtungen angeben, in welchen dem Kraftfahrzeug eine rechte bzw. eine linke Lichtquelle eines anderen Fahrzeugs entgegenkommt oder sich vor dem Kraftfahrzeug in gleicher Fahrtrichtung fortbewegt. Bei den Lichtquellen kann es sich - je nach Fahrtrichtung des anderen Fahrzeugs - um Rückleuchten oder Scheinwerfer handeln. Eine rechte Lichtquelle ist dabei immer die Lichtquelle, die vom ersten Kraftfahrzeug rechts zu erkennen ist und eine linke Lichtquelle ist die Lichtquelle, die vom ersten Kraftfahrzeug links zu erkennen ist. Es kommt bei dieser Betrachtung nicht darauf an, ob die Lichtquellen auf der rechten Seite oder linken Seite bezogen auf das andere Fahrzeug angeordnet sind.

Die Steuervorrichtung erzeugt ein Stellsignal für den rechten Scheinwerfer des Kraftfahrzeugs zum Einstellen der rechten vertikalen Hell-Dunkel-Grenze des Tunnels. Dieses Stellsignal wird in Abhängigkeit von Eingangssignal für die Richtung der rechten Lichtquelle des anderen Fahrzeugs erzeugt. Mit dem Stellsignal kann die rechte vertikale Hell-Dunkel-Grenze des Tunnels zum Entblenden eines entgegenkommenden oder vorausfahrenden Fahrzeugs verschoben werden.

Die Steuervorrichtung erzeugt analog ein Stellsignal für den linken Scheinwerfer des Kraftfahrzeugs zum Einstellen der linken vertikalen Hell-Dunkel-Grenze des Tunnels. Dieses wird analog in Abhängigkeit von Eingangssignal für die Richtung der linken Lichtquelle des anderen Fahrzeugs erzeugt. Mit dem Stellsignal kann die linke vertikale Hell-Dunkel-Grenze des Tunnels zum Entblenden eines entgegenkommenden oder vorausfahrenden Fahrzeugs verschoben werden kann.

Als Grundlage für die Ermittlung der vertikalen Hell-Dunkel-Grenzen dienen die über den ersten Eingang eingelesenen Objektwinkel, unter welchen das vorausfahrende oder entgegenkommende zweite Fahrzeug ermittelt wird. Es muss an dieser Stelle darauf hingewiesen werden, dass der Objektwinkel sich nicht auf die Kontur des zweiten Fahrzeugs im Ganzen, sondern nur auf die Position der jeweils äußersten Lichtquelle des zweiten Fahrzeugs bezieht. Dieses ist bei entgegenkommenden Fahrzeugen der rechte oder linke Frontscheinwerfer und bei vorausfahrenden Fahrzeugen das rechte oder linke Rücklicht. Bewegen sich das erste Kraftfahrzeug und das andere Fahrzeug auf einer Geraden, ist der Fahrzeugführer des anderen Fahrzeugs immer zwischen den beiden äußeren Lichtquellen des entgegenkommenden oder vorausfahrenden Fahrzeugs zu suchen.

Dieses ist jedoch nicht notwendigerweise der Fall, wenn die Längsachsen des ersten Kraftfahrzeugs und des ändern Fahrzeugs auf zu einander versetzten, parallelen oder annähernd parallelen Geraden verlaufen. Solche Situationen können auftreten, wenn sich das erste Fahrzeug und das andere Fahrzeug auf verschiedenen Fahrspuren einer mehrspurigen Straße in Geradeausfahrt bewegen. Häufig treten solche Situationen bei Überholvorgängen auf.

In solchen Situationen kann der Fahrzeugführer rechts von der rechten äußeren Lichtquelle des vorausfahrenden oder entgegenkommenden Fahrzeugs oder links von der linken äußeren Lichtquelle des selben Fahrzeugs sein. Er befindet sich dann innerhalb des Lichtkegels des rechten bzw. linken Scheinwerfers, d. h. rechts von der rechten vertikalen Hell-Dunkel-Grenze des Tunnels bzw. links von der linken vertikalen Hell-Dunkel-Grenze des Tunnels. Solche Situationen sind unerwünscht, da sie ein erhöhtes Risiko für beide Verkehrsteilnehmer darstellt.

Der Erfindung liegt daher die Aufgabe zugrunde eine Steuervorrichtung zum Steuern der vertikalen Hell-Dunkel-Grenzen bei Scheinwerfern so zu verbessern, dass auch bei Fahrten auf mehrspurigen Fahrbahnen eine Blendung weitgehend vermieden wird.

Diese Aufgabe wird erfindungsgemäß dadurch gelöst, dass die Steuervorrichtung geeignet und eingerichtet ist, in den Fällen, in denen die Eingangssignale Richtungen der Lichtquellen des anderen Fahrzeugs anzeigen, die angeben, dass sich alle Lichtquellen auf einer Seite der Richtung der Längsachse des ersten Kraftfahrzeugs befinden, die Stellsignale zusätzlich in Abhängigkeit von einem Vorhalt zu erzeugen. Der Vorhalt hängt von einem Winkel zwischen der Richtung der der Längsachse nächstliegenden Lichtquelle des anderen Fahrzeugs und der Längssachse des ersten Kraftfahrzeugs ab.

Bei der Ermittlung der Stellsignale wird berücksichtigt, wie groß der Objektwinkel, unter dem die der Fahrzeuglängsachse des ersten Fahrzeugs nächstliegende Lichtquelle des anderen Fahrzeugs erkannt wird. Dieser Objektwinkel wird aber nur dann berücksichtigt, wenn ein nennenswerter seitlicher Versatz der Fahrzeuge vorliegt. Dies ist definitionsgemäß immer dann der Fall, wenn beide Lichtquelle auf einer Seite der Längsachse des ersten Kraftfahrzeugs erkannt werden. Liegt nur einer der erkannten Lichtquelle auf der anderen Seite, wird der Versatz nicht berücksichtigt und ein Vorhalt geht nicht in die Ermittlung der Stellgrößen ein.

Damit ist es möglich, einen nennenswerten Versatz bei der Geradeausfahrt zweier Fahrzeuge zu berücksichtigen. Der Vorhalt führt dazu, dass die vertikalen Hell-Dunkel-Grenzen immer so eingestellt sind, dass eine hohe Wahrscheinlichkeit besteht, dass Fahrzeugführer die sich rechts von der rechten äußeren Lichtquelle des zweiten Fahrzeugs bzw. links von der linken äußeren Lichtquelle des zweiten Fahrzeugs befinden, nicht mehr geblendet werden.

Das Mittel zum Erzeugen einer erfindungsgemäße Steuervorrichtung kann geeignet und eingerichtet sein, eine erste Zwischengröße für den rechten Scheinwerfer und eine erste Zwischengröße für den linken Scheinwerfer in Abhängigkeit von Eingangssignal für die Richtung der rechten Lichtquelle des anderen Fahrzeugs bzw. der linken Lichtquelle des anderen Fahrzeugs zu erzeugen. Diese Zwischengröße bildet das Stellsignal sofern die Lichtquellen des anderen Fahrzeugs recht und links der Fahrzeuglängsachse erkannt werden.

Das Mittel zum Erzeugen kann geeignet und eingerichtet sein, eine zweite Zwischengröße für den rechten Scheinwerfer und eine zweite Zwischengröße für den linken Scheinwerfer zu erzeugen, sobald sich alle auf einer Seite der Richtung der Längsachse des Kraftfahrzeugs befinden. Das Mittel zum Erzeugen kann ferner geeignet und eingerichtet sein, die Stellsignale in Abhängigkeit der ersten Zwischengrößen und der zweiten Zwischengrößen zu erzeugen. In einem einfachen Fall werden die beiden Zwischengrößen zur Erzeugung der Stellgröße durch das Mittel zum Erzeugen aufsummiert.

Das Mittel zum Erzeugen einer erfindungsgemäßen Vorrichtung kann die zweite Zwischengröße δ*ₗᵢₙₖₛ* für die linke Hell-Dunkel-Grenze folgendermaßen bestimmen: δ*ₗᵢₙₖₛ* = [-1°;0°] wenn α*ₗᵢₙₖₛ* > 0 ist und α*ₗᵢₙₖₛ* der Objektwinkel auf die linke Lichtquelle des anderen Fahrzeugs ist und Objektwinkel für Objekte rechts von der Längsachse des Kraftfahrzeugs größer null sind.

Entsprechend kann das Mittel zum Erzeugen die zweite Zwischengröße *δ_{rechts}* für die rechte Hell-Dunkel-Grenze folgendermaßen bestimmen: *δ_{rechts}* = [0°;1°] wenn α*_{rechts}* < 0 ist und α*_{rechts}* der Objektwinkel auf die rechte Lichtquelle des anderen Fahrzeugs ist und Objektwinkel für Objekte links von der Längsachse des Kraftfahrzeugs kleiner null sind.
In den übrigen sind die zweiten Zwischengröße für die Hell-Dunkel-Grenzen gleich null.

Anhand der beigefügten Zeichnungen wird die Erfindung nachfolgend näher erläutert. Dabei zeigt:
- Fig. 1: eine Draufsicht auf eine schematisch dargestellte Fahrsituation zweier einander folgender Fahrzeuge ohne Berücksichtigung der Erfindung,
- Fig. 2: die Fahrsituation aus Figur 1 mit Berücksichtigung der Erfindung,

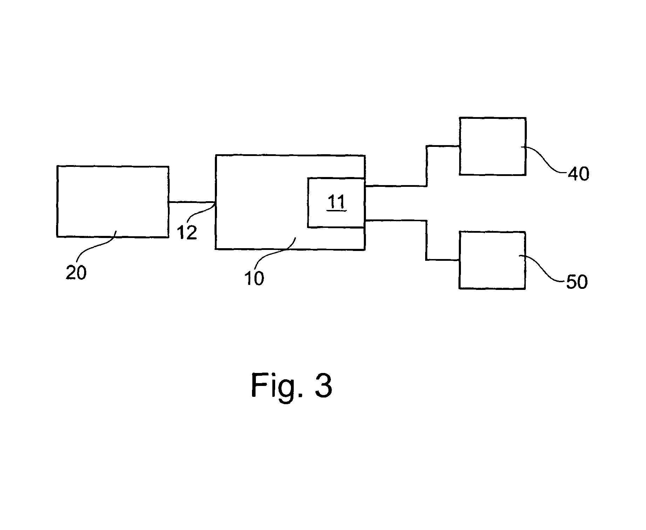

- Fig. 3: ein Blockschaltbild einer Anordnung mit einer erfindungsgemäßen Steuervorrichtung.

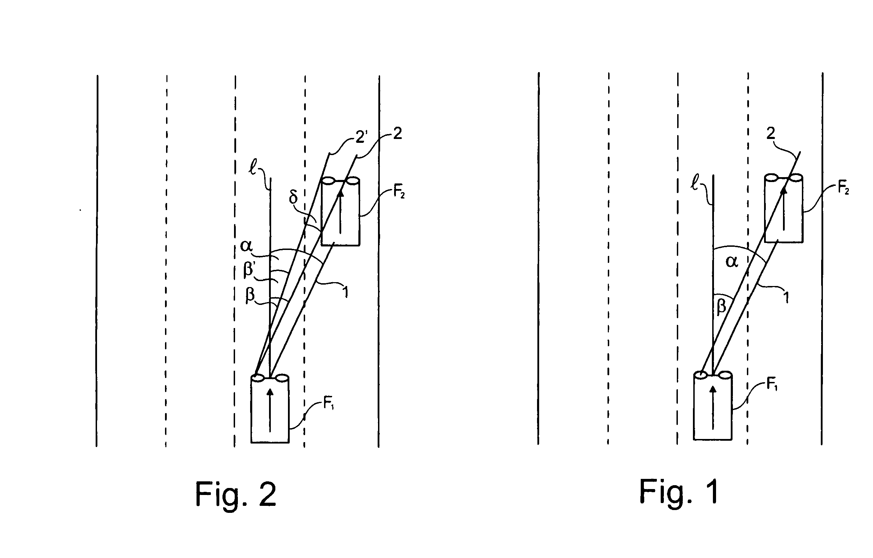

In der in der Figur 1 dargestellten Fahrsituation folgt ein erstes Kraftfahrzeug F₁ einem zweiten Kraftfahrzeug F₂ auf einer mehrspurigen Straße auf einer nach links versetzten Fahrspur. Das erste Kraftfahrzeug ist mit Scheinwerfern ausgestattet, deren vertikale Hell-Dunkel-Grenze zum Entblenden des vorausfahrenden Kraftfahrzeugs F₂ verschoben werden können. Das erste Kraftfahrzeug F₁ weist dazu einen Sensor auf, mit welchem es den sogenannten Objektwinkel des zweiten Kraftfahrzeugs F₁ feststellen kann. Bei dem Sensor handelt es sich um ein Kamerasystem. Ausgehend von der Längsachse I des ersten Kraftfahrzeugs wird mittels des Kamerasystems der Objektwinkel α bestimmt, der sich auf die Lichtquelle des zweiten Fahrzeugs F₂ bezieht, die der Längsachse des ersten Kraftfahrzeugs am nächsten ist. Diese Lichtquelle des zweiten Fahrzeugs F₂ ist das linke Rücklicht.

Durch das Verschieben der vertikalen Hell-Dunkel-Grenze bei entsprechend dem Objektwinkel a bzw. der Richtung 1 der äußersten Lichtquelle wird eine weitgehende Entblendung des vorausfahrenden zweiten Fahrzeugs F₂ erreicht.

Allerdings erfolgt keine vollständige Entblendung, wie sich aus der in der Figur 1 dargestellten Fahrsituation anschaulich ergibt. Die Verschiebung der vertikalen Hell-Dunkel-Grenze 2 um den Winkel β erfolgt rechnerisch aus dem Objektwinkel α bzw. der Richtung 1, unter welcher die der Längsachse des ersten Kraftfahrzeugs F₁ nächstliegende Lichtquelle durch das Kamerasystem erfasst wird. Rechts von dieser Lichtquelle, also jenseits der Richtung 1, kann je nach Konstruktion des zweiten Fahrzeugs F₂ der Sitzplatz des Kraftfahrzeugführers sein. Der Fahrzeugführer des zweiten Fahrzeugs F₂ ist somit wohlmöglich - bezogen auf die Längsrichtung des ersten Fahrzeugs F₂ - jenseits der Hell-Dunkel-Grenze 2, d. h. außerhalb des dunklen Tunnels und innerhalb des Lichtkegels des linken Scheinwerfers. Dadurch kann es zu einer, wenn auch geringfügigen, doch merklichen Blendung des Fahrzeugführers des zweiten Fahrzeugs F₂ kommen.

Durch die Erfindung wird eine derartige Blendung bei Parallelfahrten mit seitlichem Versatz vermieden. Dieses wird dadurch erreicht, dass auf die aufgrund des Objektwinkels ermittelte vertikale Hell-Dunkel-Grenze 2 ein Vorhalt gegeben wird, sobald alle Lichtquellen des zweiten Fahrzeugs F₂ auf einer Seite bezogen auf die Längsachse I des ersten Kraftfahrzeugs liegen. Die Richtung der vertikalen Hell-Dunkel-Grenze wird um den Vorhalt, in der Figur 2 als Winkel δ dargestellt, auf eine Richtung 2' verschoben. Diese Verschiebung auf die Richtung 2' hat zur Folge, dass der Fahrzeugführer des zweiten Fahrzeugs F₂ bezogen auf die Längsrichtung I des ersten Fahrzeugs F₁ jenseits der vertikalen Hell-Dunkel-Grenze, innerhalb des sogenannten Tunnels liegt. Es erfolgt dadurch kein direkter Lichteinfall von dem rechten Scheinwerfer des ersten Fahrzeugs F₂ auf den Sitzplatz des Fahrzeugführers des zweiten Fahrzeugs F₂. Eine Blendung des Fahrzeugführers des zweiten Fahrzeugs F₂ wird dadurch noch wirksamer vermieden.

Das Fahrzeug F₁, das mit einer erfindungsgemäßen Steuervorrichtung ausgestattet ist, weist zum einen die erfindungsgemäße Steuervorrichtung 10 mit dem Mittel zum Erzeugen eines Stellsignals für den rechten Scheinwerfer bzw. eines Stellsignals für den linken Scheinwerfer auf. Die Steuervorrichtung weist einen ersten Eingang 12 für Signale eines Kamerasystems 20 auf. Über den ersten Eingang 12 wird das Signal für den Objektwinkel die Steuervorrichtung 10 eingelesen. Es wird ermittelt, ob die Lichtquellen des anderen Fahrzeugs auf einer Seite der Längsachse des ersten Fahrzeugs liegen. Gegebenenfalls wird ein Vorhalt bei der Ermittlung der Stellgrößen berücksichtigt. Die von dem Mittel 11 zum Erzeugen der Stellsignale erzeugten Stellsignale werden Ausgänge der Steuervorrichtung 10 an den linken Scheinwerfer 40 bzw. den rechten Scheinwerfer 50 gegeben. In den Scheinwerfern 40, 50 werden die Stellsignale durch Stellmotoren oder dergleichen zum Einstellen der vertikalen Hell-Dunkel-Grenze benutzt.

### Bezugszeichenliste

- 10: Vorrichtung
- 40: Scheinwerfer
- 50: Scheinwerfer
- F₁: erstes Kraftfahrzeug
- 12a: Eingang
- 12b: Eingang
- I: Längsachse
- F₂: zweites Kraftfahrzeug
- 11: Mittel
- 2: vertikale Hell-Dunkel-Grenze
- 1: Richtung
- α: Objektwinkel
- β: Winkel
- δ: Winkel
- 2': Richtung

## Patentansprüche

1. Vorrichtung (10) zum Steuern der vertikalen Hell-Dunkel-Grenze bei Scheinwerfern (40, 50) eines Kraftfahrzeugs (F₁), wobei
- die Steuervorrichtung (10) Eingänge (12a, 12b) für Eingangssignale aufweist, welche die auf eine Längsachse (I) des Kraftfahrzeugs bezogenen Richtungen angeben, in welchen dem Kraftfahrzeug (F₁) eine rechte bzw. eine linke Lichtquelle eines anderen Fahrzeugs (F₂) entgegenkommt oder sich vor dem Kraftfahrzeug (F₁) in gleicher Fahrtrichtung fortbewegt,
- die Steuervorrichtung (10) ein Mittel (11) zum Erzeugen von Stellsignalen aufweist, das geeignet und eingerichtet ist, ein Stellsignal für den rechten Scheinwerfer (50) des Kraftfahrzeugs (F₁) zum Einstellen der rechten vertikalen Hell-Dunkel-Grenze von den Scheinwerfern erzeugten Lichts in Abhängigkeit von Eingangssignal für die Richtung der rechten Lichtquelle des anderen Fahrzeugs (F₂) zu erzeugen,
- mit welchem die rechte vertikale Hell-Dunkel-Grenze des vom rechten Scheinwerfer (50) des Kraftfahrzeugs (F₁) erzeugten Lichts zum Entblenden eines entgegenkommenden oder vorausfahrenden Fahrzeugs (F₂) verschoben werden kann und
- das Mittel (11) zum Erzeugen von Stellsignalen geeignet und eingerichtet ist, ein Stellsignal für den linken Scheinwerfer (40) des Kraftfahrzeugs (F₁) zum Einstellen der linken vertikalen Hell-Dunkel-Grenze des von den Scheinwerfern erzeugten Lichts in Abhängigkeit von Eingangssignal für die Richtung der linken Lichtquelle des anderen Fahrzeugs (F₂) zu erzeugen,
- mit welchem die linke vertikale Hell-Dunkel-Grenze des vom linken Scheinwerfer (50) des Kraftfahrzeugs (F₁) erzeugten Lichts zum Entblenden eines entgegenkommenden oder vorausfahrenden Fahrzeugs (F₂) verschoben werden kann,
**dadurch gekennzeichnet,**
- **dass** das Mittel (11) zum Erzeugen von Stellsignalen geeignet und eingerichtet ist, in den Fällen, in denen die Eingangssignale Richtungen der Lichtquellen des anderen Fahrzeugs anzeigen, die angeben, dass sich alle Lichtquellen auf einer Seite der Richtung der Längsachse (I) des Kraftfahrzeugs (F₁) befinden, die Stellsignale zusätzlich in Abhängigkeit von einem Vorhalt (δₗᵢₙₖₛ,δ_{rechts}) zu erzeugen,
- wobei der Vorhalt von einem Winkel zwischen der Richtung der der Längsachse (I) nächstliegenden Lichtquelle des anderen Fahrzeug (F₂) und der Längssachse (I) abhängt.

2. Steuervorrichtung (10) nach Anspruch 1, **dadurch gekennzeichnet, dass** das Mittel (11) zum Erzeugen der Stellsignale geeignet und eingerichtet ist, eine erste Zwischengröße (β) für den rechten Scheinwerfer (50) und eine erste Zwischengröße für den linken Scheinwerfer (40) in Abhängigkeit vom Eingangssignal für die Richtung der rechten Lichtquelle des anderen Fahrzeugs bzw. der linken Lichtquelle des anderen Fahrzeugs zu erzeugen.

3. Steuervorrichtung (10) nach Anspruch 2, **dadurch gekennzeichnet, dass** das Mittel (11) zum Erzeugen der Stellsignale geeignet und eingerichtet ist, die Stellsignale in Abhängigkeit der ersten Zwischengrößen (β) und des Vorhalts (δ) zu erzeugen.

4. Steuervorrichtung (10) nach Anspruch 3 **dadurch gekennzeichnet, dass** das Mittel (11) zum Erzeugen der Stellsignale zum Addieren der ersten Zwischengrößen (β) und des Vorhalts (δ) geeignet und eingerichtet ist.

5. Steuervorrichtung (10) nach einem der Ansprüche 1 bis 4, **dadurch gekennzeichnet, dass** das Mittel (11) zum Erzeugen der Stellsignale den Vorhalt (δ*ₗᵢₙₖₛ*) für die linke Hell-Dunkel-Grenze folgendermaßen bestimmt: δ*ₗᵢₙₖₛ* ∈ [-1°;0°[ wenn α*ₗᵢₙₖₛ* > 0 ist und α*ₗᵢₙₖₛ* der Objektwinkel auf die linke Lichtquelle des anderen Fahrzeugs (F₂) ist und Objektwinkel für Objekte rechts von der Längsachse (I) des Kraftfahrzeugs (F₁) größer null sind.

6. Steuervorrichtung (10) nach einem der Ansprüche 1 bis 5, **dadurch gekennzeichnet, dass** das Mittel (11) zum Erzeugen der Stellsignale den Vorhalt (δ*_{rechts}*) für die rechte Hell-Dunkel-Grenze folgendermaßen bestimmt: δ*_{rechts}* ∈ ]0°;1°] wenn α*_{recht*s}* < 0 ist und α*_{rechts}* der Objektwinkel auf die rechte Lichtquelle des anderen Fahrzeugs (F₂) ist und Objektwinkel für Objekte links von der Längsachse (I) des Kraftfahrzeugs (F₁) kleiner null sind.

7. Verfahren (10) zum Steuern der vertikalen Hell-Dunkel-Grenze bei Scheinwerfern (40, 50) eines Kraftfahrzeugs (F₁) mit einer Steuervorrichtung nach einem der Ansprüche 1 bis 6, wobei
- über Eingänge (12a, 12b) der Steuervorrichtung (10) Eingangssignale eingelesen werden, welche die auf eine Längsachse (I) des Kraftfahrzeugs bezogenen Richtungen angeben, in welchen dem Kraftfahrzeug (F₁) eine rechte bzw. eine linke Lichtquelle eines anderen Fahrzeugs (F₂) entgegenkommt oder sich vor dem Kraftfahrzeug (F₁) in gleicher Fahrtrichtung fortbewegt,
- die Steuervorrichtung ein Stellsignal für den rechten Scheinwerfer (50) des Kraftfahrzeugs (F₁) zum Einstellen der rechten vertikalen Hell-Dunkel-Grenze des von den Scheinwerfern (50) des Kraftfahrzeugs (F₁) erzeugten Lichts in Abhängigkeit von Eingangssignal für die Richtung der rechten Lichtquelle des anderen Fahrzeugs (F₂) erzeugt,
- mit welchem die rechte vertikale Hell-Dunkel-Grenze des vom rechten Scheinwerfer (50) des Kraftfahrzeugs (F₁) erzeugten Lichts zum Entblenden eines entgegenkommenden oder vorausfahrenden Fahrzeugs (F₂) verschoben werden kann und
- die Steuervorrichtung (10) ein Stellsignal für den linken Scheinwerfer (40) des Kraftfahrzeugs (F₁) zum Einstellen der linken vertikalen Hell-Dunkel-Grenze des von den Scheinwerfern (40) des Kraftfahrzeugs (F₁) erzeugten Lichts in Abhängigkeit vom Eingangssignal für die Richtung der linken Lichtquelle des anderen Fahrzeugs (F₂) erzeugt,
- mit welchem die linke vertikale Hell-Dunkel-Grenze des vom linken Scheinwerfer (50) des Kraftfahrzeugs (F₁) erzeugten Lichts zum Entblenden eines entgegenkommenden oder vorausfahrenden Fahrzeugs (F₂) verschoben werden kann,
**dadurch gekennzeichnet,**
- **dass** die Steuervorrichtung (10) in den Fällen, in denen die Eingangssignale Richtungen der Lichtquellen des entgegenkommenden oder vorrausfahrenden anderen Fahrzeugs (F₂) anzeigen, die alle auf einer Seite der Richtung der Längsachse (I) des Kraftfahrzeugs (F₁) liegen, die Stellsignale zusätzlich in Abhängigkeit von einem Vorhalt (δ) erzeugt,
- wobei der Vorhalt (5) von einem Winkel zwischen der Richtung der der Längsachse (I) nächstliegenden Lichtquelle des anderen Fahrzeugs (F2) und der Längssachse (I) abhängt.

## Claims

1. Device (10) for controlling the vertical cut-off line in headlamps (40, 50) of a motor vehicle (F₁), wherein
- the control device (10) has inputs (12a, 12b) for input signals indicating the directions relating to a longitudinal axis (I) of the motor vehicle, in which the motor vehicle (F₁) is approached by an oncoming right-hand and left-hand light source of another motor vehicle (F₂) or these light sources move in front of and away from the motor vehicle (F₁) in the same direction of travel,
- the control device (10) has a means (11) for creating control signals which is suitable and equipped for creating a control signal for the right-hand headlamp (50) of the motor vehicle (F₁) for the setting of the right-hand vertical cut-off line of the light generated by the headlamps as a function of the input signal for the direction of the right-hand light source of the other motor vehicle (F₂)
- by means of which the right-hand vertical cut-off line of the light generated by the right-hand headlamp (50) of the motor vehicle (F₁) can be moved to avoid the dazzling of an oncoming motor vehicle or a motor vehicle driving ahead (F₂) and
- said means (11) for creating control signals is suitable and equipped for creating a control signal for the left-hand headlamp (40) of the motor vehicle (F₁) for the setting of the left-hand vertical cut-off line of the light generated by the headlamps as a function of the input signal for the direction of the left-hand light source of the other motor vehicle (F₂),
- with which the left-hand vertical cut-off line of the light generated by the left-hand headlamp (50)of the motor vehicle (F₁) can be moved to avoid the dazzling of an oncoming motor vehicle or a motor vehicle driving ahead (F₂)
**Characterized in that**
- the means (11) for creating the control signal is suitable and equipped for creating the control signals taking into account a derivative action (δ_{LH}, δ_{RH}) in cases where the input signals indicate directions of the light sources of the other vehicles, which show that all light sources are on one side of the direction of the longitudinal axis (I) of the motor vehicle (F₁),
- and wherein the derivative action depends on an angle between the direction of the light source of the other motor vehicle (F₂) closest to the longitudinal axis (I) and the longitudinal axis (I).

2. Control device (10) according to claim 1, **characterized in that** the means (11) for creating the control signals is suitable and equipped for creating a first interim value (β) for the right-hand headlamp (50) and a first interim value for the left-hand headlamp (40) as a function of the input signal for the direction of the right-hand light source of the other vehicle or the left-hand light source of the other vehicle.

3. Control device (10) according to claim 2, **characterized in that** the means (11) for creating the control signals is suitable and equipped for creating the control signals as a function of the first interim values (β) and the derivative action (δ).

4. Control device (10) according to claim 3, **characterized in that** the means (11) for creating the control signals is suitable and equipped for the addition of the first interim values (β) and the derivative action (δ).

5. Control device (10) according to one of the claims 1 to 4, **characterized in that** the means (11) for creating the control signals determines the derivative action (δ_{LH}) for the left-hand cut-off line as follows:
δ_{LH} ∈ [-1°;0°[ if α_{LH} >0° and α_{LH} is the object angle onto the left-hand light source of the other vehicle (F2) and if object angles for objects on the right-hand side of the longitudinal axis (I) of the motor vehicle (F₁) are larger than zero.

6. Control device (10) according to one of the claims 1 to 5, **characterized in that** the means (11) for creating the control signals determines the derivative action (δ_{RH}) for the right-hand cut-off line as follows:
δ_{RH} ∈ ]0°;1°] if α_{RH} <0° and α_{RH} is the object angle onto the right-hand light source of the other vehicle (F₂) and if object angles for objects on the left-hand side of the longitudinal axis (I) of the motor vehicle (F1) are smaller than zero.

7. Method (10) for controlling the vertical cut-off line in headlamps (40, 50) of a motor vehicle (F₁) with a control device according to one of the claims 1 to 6, wherein
- input signals indicating the directions related to a longitudinal axis (I) of the motor vehicle, in which the motor vehicle (F₁) is approached by an oncoming right-hand or left-hand light source of another vehicle (F₂) or in which said light sources move in front of the vehicle in the same direction as the motor vehicle (F₁), are read in via inputs (12a, 12b) of the control device (10).
- the control device creates a control signal for the right-hand headlamp (50) of the motor vehicle (F₁) for the setting of the right-hand vertical cut-off line of the light generated by the headlamps (50) of the motor vehicle (F₁) as a function of the input signal for the direction of the right-hand light source of the other vehicle (F₂),
- with which the right-hand vertical cut-off line of the light generated by the right-hand headlamp (50) of the motor vehicle (F₁) can be moved to prevent an oncoming vehicle (F₂) or a vehicle (F₂) driving ahead from being dazzled and
- the control device (10) creates a control signal for the left-hand headlamp (40) of the motor vehicle (F₁) for the setting of the left-hand vertical cut-off line of the light generated by the headlamps (40) of the motor vehicle (F₁) as a function of the input signal for the direction of the left-hand light source of the other vehicle (F₂),
- with which the left-hand vertical cut-off line of the light generated by the left-hand headlamp (50) of the motor vehicle (F₁) can be moved to prevent an oncoming vehicle (F₂) or a vehicle (F₂) driving ahead from being dazzled,
**characterized in that**
- the control device (10) creates the control signals in addition as a function of a derivative action (δ) in those cases in which the input signals indicate that the directions of the light sources of the oncoming vehicle (F₂) or of the vehicle (F₂) driving ahead are all on one side of the direction of the longitudinal axis (I) of the motor vehicle (F₁),
- and wherein the derivative action (δ) depends on an angle between the direction of the light source of the other motor vehicle (F₂) closest to the longitudinal axis (I) and the longitudinal axis (I).

## Revendications

1. Dispositif (10) pour piloter la coupure clair-obscur verticale des projecteurs (40, 50) d'un véhicule automobile (F₁)
- le dispositif de pilotage (10) présentant des entrées (12a, 12b) pour des signaux d'entrée qui indiquent les directions relatives à un axe longitudinal (I) du véhicule automobile dans lesquelles une source de lumière droite respectivement gauche d'un autre véhicule automobile (F₂) se déplace en sens inverse par rapport au véhicule automobile (F₁) ou se déplace devant le véhicule automobile (F₁) dans la même direction,
- le dispositif de pilotage (10) présentant un moyen (11) pour engendrer des signaux de réglage qui est approprié et configuré à engendrer un signal de réglage pour le projecteur droit (50) du véhicule automobile (F₁) pour régler la coupure clair-obscur verticale droite de la lumière produite par les projecteurs en fonction du signal d'entrée pour la direction de la source de lumière droite de l'autre véhicule (F₂),
- avec lequel la coupure clair-obscur verticale droite de la lumière produite par le projecteur droit (50) du véhicule automobile (F,) peut être déplacée pour le non-éblouissement d'un véhicule (F₂) en sens inverse ou qui précède,
- le moyen (11) pour engendrer des signaux de réglage étant approprié et configuré à engendrer un signal de réglage pour le projecteur gauche (40) du véhicule automobile (F₁) pour régler la coupure clair-obscur verticale gauche de la lumière produite par les projecteurs en fonction du signal d'entrée pour la direction de la source de lumière gauche de l'autre véhicule (F₂),
- avec lequel la coupure verticale gauche de la lumière produite par le projecteur gauche (50) du véhicule automobile (F₁) peut être déplacée pour le non-éblouissement d'un véhicule (F₂) en sens inverse ou qui précède,
**caractérisé en ce que**
- le moyen (11) pour engendrer des signaux de réglage dans les cas dans lesquels les signaux d'entrée indiquent les directions des sources de lumière de l'autre véhicule qui indiquent que toutes les sources de lumière se trouvent sur un côté de la direction de l'axe longitudinal (I) du véhicule automobile (F₁) est approprié et configuré à engendrer les signaux de réglage additionnellement en fonction du dosage de dérivation (δ gauche,
δ droit),
- le dosage de dérivation dépendant d'un angle entre la direction de la source de lumière étant la plus proche à l'axe longitudinal (I) de l'autre véhicule (F₂) et l'axe longitudinal (I).

2. Dispositif de pilotage (10) selon la revendication 1, **caractérisé en ce que** le moyen (11) pour engendrer les signaux de réglage est approprié et configuré à engendrer une première grandeur intermédiaire (β) pour le projecteur droit (50) et une première grandeur intermédiaire pour le projecteur gauche (40) en fonction du signal d'entrée pour la direction de la source de lumière droite de l'autre véhicule respectivement la direction de la source de lumière gauche de l'autre véhicule.

3. Dispositif de pilotage (10) selon la revendication 2, **caractérisé en ce que** le moyen (11) pour engendrer les signaux de réglage est approprié et configuré à engendrer les signaux de réglage en fonction des premières grandeurs intermédiaires (β) et du dosage de dérivation (δ).

4. Dispositif de pilotage (10) selon la revendication 3, **caractérisé en ce que** le moyen (11) pour engendrer les signaux de réglage est approprié et configuré à additionner les premières grandeurs intermédiaires (β) et le dosage de dérivation (δ).

5. Dispositif de pilotage (10) selon l'une des revendications 1 à 4, **caractérisé en ce que** le moyen (11) pour engendrer les signaux de réglage détermine le dosage de dérivation (δ gauche) pour la coupure clair-obscur gauche de manière suivante :
- δ gauche [-1°; 0°[ si gauche > 0° et gauche étant l'angle de l'objet
sur la source de lumière gauche de l'autre véhicule (F₂) et les angles de l'objet pour les objets à droite de l'axe longitudinal (I) du véhicule automobile (F₁) étant supérieurs à zéro.

6. Dispositif de pilotage (10) selon l'une des revendications 1 à 5, **caractérisé en ce que** le moyen (11) pour engendrer les signaux de réglage détermine le dosage de dérivation (δ droit) pour la coupure clair-obscur droite de manière suivante :
δ _{droit} ]0°; 1°] si α_{droite} < 0° et α_{droite} étant l'angle de l'objet sur la source de lumière droite de l'autre véhicule (F₂) et les angles de l'objet pour les objets à gauche de l'axe longitudinal (I) du véhicule automobile (F₁) étant inférieurs à zéro.

7. Procédé (10) pour piloter la coupure clair-obscur verticale pour projecteurs (40, 50) d'un véhicule automobile (F₁) avec un dispositif de pilotage selon l'une des revendications 1 à 6,
- des signaux d'entrée seront lus par le dispositif de pilotage (10) à travers des entrées (12a, 12b) qui indiquent les directions relatives à un axe longitudinal (I) du véhicule automobile dans lesquelles une source de lumière droite respectivement gauche d'un autre véhicule (F₂) se déplace en sens inverse par rapport au véhicule automobile (F₁) ou se déplace devant le véhicule automobile (F₁) dans la même direction,
- le dispositif de pilotage engendrant un signal de réglage pour le projecteur droit (50) du véhicule automobile (F₁) pour le réglage de la coupure clair-obscur verticale droite de la lumière produite par les projecteurs (50) du véhicule automobile (F₁) en fonction du signal d'entrée pour la direction de la source de lumière droite de l'autre véhicule (F₂),
- avec lequel la coupure verticale droite de la lumière produite par le projecteur droit (50) du véhicule (F₁) peut être déplacée pour le non-éblouissement d'un véhicule (F₂) en sens inverse ou qui précède,
- le dispositif de pilotage (10) engendrant un signal de réglage pour le projecteur gauche (40) du véhicule automobile (F₁) pour le réglage de la coupure clair-obscur verticale gauche de la lumière produite par les projecteurs (40) du véhicule automobile (F₁) en fonction du signal d'entrée pour la direction de la source de lumière gauche de l'autre véhicule (F₂),
- avec lequel la coupure verticale gauche de la lumière produite par le projecteur gauche (50) du véhicule (F₁) peut être déplacée pour le non-éblouissement d'un véhicule (F₂) en sens inverse ou qui précède,
**caractérisé en ce que**
- le dispositif de réglage (10) dans les cas dans lesquels les signaux d'entrée indiquent les directions des sources de lumière de l'autre véhicule (F₂) en sens inverse ou qui précède qui se trouvent sur un côté de la direction de l'axe longitudinal (I) du véhicule automobile (F₁), engendre les signaux de réglage additionnellement en fonction d'un dosage de dérivation (δ ),
- le dosage de dérivation (δ) dépendant d'un angle entre la direction de la source de lumière étant la plus proche à l'axe longitudinal (I) de l'autre véhicule (F₂) et l'axe longitudinal (I). Übersetzung: T. Goldschmidt/ 30.04.12
